Europäisches Patentamt

European Patent Office

Office européen des brevets

(19)

(11) EP 0 815 463 B1

(12) FASCICULE DE BREVET EUROPEEN

(45) Date de publication et mention
de la délivrance du brevet:
01.12.1999 Bulletin 1999/48

(51) Int Cl.⁶: G01S 1/02

(21) Numéro de dépôt: 96906819.6

(22) Date de dépôt: 12.03.1996

(86) Numéro de dépôt international:
PCT/FR96/00384

(87) Numéro de publication internationale:
WO 96/28746 (19.09.1996 Gazette 1996/42)

(54) **PROCEDE ET DISPOSITIF D'ANALYSE DE SIGNAUX DE RADIONAVIGATION**

VERFAHREN UND GERÄT ZUR ANALYSE VON FUNKSIGNALEN DER NAVIGATION

METHOD AND DEVICE FOR ANALYSING RADIO NAVIGATION SIGNALS

(84) Etats contractants désignés:
AT BE CH DE DK ES FI FR GB GR IE IT LI NL PT
SE

(30) Priorité: 13.03.1995 FR 9502870

(43) Date de publication de la demande:
07.01.1998 Bulletin 1998/02

(73) Titulaire: Le Herisse, Pascal
31000 Toulouse (FR)

(72) Inventeur: Le Herisse, Pascal
31000 Toulouse (FR)

(74) Mandataire: Colas, Jean-Pierre et al
Cabinet de Boisse et Colas
37, avenue Franklin D. Roosevelt
75008 Paris (FR)

(56) Documents cités:
DE-A- 3 131 494          GB-A- 2 270 226
US-A- 4 414 632

## Description

La présente invention concerne un procédé et un dispositif permettant d'effectuer l'analyse des signaux rayonnés par des stations de radionavigation, de type "ILS" et "VOR" par exemple, en fournissant les valeurs caractéristiques des signaux élémentaires composant les signaux d'informations de guidage transmis par lesdites stations.

## ARRIÈRE-PLAN DE L'INVENTION

Les stations de type "ILS" sont composées de trois sous-stations :

- la station "Localiser", ou radio alignement de piste, fournit l'information d'écart angulaire par rapport à l'axe de piste,
- la station "Glide Path", ou radio alignement de descente, fournit l'information d'écart angulaire par rapport à un plan de descente,
- les stations "markers", ou radio bornes, fournissent l'information de distance par rapport au seuil de piste.

Les informations d'écart angulaire sont mesurées à partir de la différence des taux de modulation, "DDM", de deux fréquences à 90 et 150 Hz.

Les balises "VOR" de type classique ou Doppler fournissent des informations d'écart angulaire par rapport à une référence calée au Nord magnétique. Les informations d'écart angulaire sont mesurées à partir de la différence de phase entre un signal 30 Hz de référence et un signal 30 Hz variable.

Les balises ILS et VOR répondent à des normes et des spécifications internationales publiées par l'Organisation Internationale de l'Aviation Civile O.A.C.I. et ce notamment dans les documents dits "annexe 10" et "annexe 8071" volumes 1 et 2.

Les balises (ou stations) de radionavigation sont constituées de plusieurs blocs fonctionnels. Ces blocs, une fois associés et parfaitement adaptés les uns aux autres, fournissent des signaux de guidage aux aéronefs.

Les constituants d'une balise peuvent être référencés comme suit :

- un bloc "énergie" délivrant l'ensemble des tensions d'alimentation nécessaires aux autres blocs,
- un bloc "génération de signaux" délivrant des signaux basses fréquences, dits signaux information, et des signaux radio fréquences, dits signaux porteurs. Ces signaux B.F. et R.F. ont des formes d'onde sinusoïdales pures.
- un bloc "distribution" assurant la répartition et le mélange des signaux en provenance du bloc "génération" vers la ou les antennes d'émission,
- un bloc "rayonnement" constitué d'une ou plusieurs antennes. Ces dernières peuvent être alimentées par un ou plusieurs des types de signaux générés par le bloc "génération",
- un bloc "capteur" constitué d'antennes juxtaposées ou à distance des antennes d'émission. Elles sont dénommées coupleurs, capteurs proches "nearfield" ou capteurs lointains "farfield". Ces capteurs sont associés à un circuit de "recombinaison",
- un bloc "contrôle" ou moniteur assurant les mesures des paramètres rayonnés par les blocs génération, distribution et rayonnement, et ce pour un nombre x de voies.
- un bloc "décision" assurant la synthèse des x voies du bloc "contrôle" pour décider de l'arrêt de la station ou le basculement sur un émetteur de secours.

Les blocs capteur, contrôle et décision assurent la fonction de contrôle de l'intégrité des signaux transmis, fonction communément dénommée "monitoring" ou moniteur.

La complexité d'un tel système nécessite une haute technicité et une grande connaissance de la part des personnels ayant en charge leur mise en service et leur maintenance. Ces personnels doivent de plus utiliser de nombreux instruments de mesure.

Les paramètres permettant de diagnostiquer une panne ou une variation des informations émises par les stations sont de plus non accessibles pour certains d'entre eux. Par exemple : la phase et l'amplitude des signaux BLS, l'écart en fréquence et en niveau des divers émetteurs formant partie de la balise.

Les opérateurs doivent intervenir physiquement sur les connections entre les blocs fonctionnels et par là même interrompre l'utilisation de la balise par les aéronefs, ce qui réduit la disponibilité de la balise.

Les signaux transmis par les balises sur un canal sont composés de plusieurs sources dénommées P+BL, porteuse plus bande latérales, et BLS, bandes latérales seules. Ces sources radiofréquences peuvent être calées sur plusieurs fréquences à l'intérieur d'un même canal. Communément, les balises sont mono- ou bifréquences suivant le nombre de radiofréquences qu'elles émettent.

Les signaux P+BL et BLS sont générés par le produit de signaux radiofréquences avec des signaux basses fréquences et une composante continue, ce qui constitue une modulation d'amplitude.

A titre d'exemple non limitatif, l'équation caractéristique du signal de guidage rayonné x(t) par une balise du type ILS, peut prendre la forme suivante :

$$x(t) = A * \cos(2\,\pi * F0 * t + \Phi\_PBL0) * [1 + m1\sin(2\,\pi * f1 * t) +$$

$$m2\sin(2\,\pi * f2 * t + \Phi2) + m3\sin(2\,\pi * f3 * t) + m4\sin(2\,\pi * f4 * t)] +$$

$$B*\cos(2\pi*F0*t+\Phi\_BLS0)*[m1'\sin(2\pi*f1*t)+m2'\sin(2\pi*f2*t+\Phi2)] +$$

$$C * \cos(2\,\pi * F1 * t + \Phi\_PBL1) * [1 + m1''\sin(2\,\pi * f1 * t) +$$

$$m2''\sin(2\,\pi * f2 * t + \Phi2) + m3''\sin(2\,\pi * f3 * t) + m4''\sin(2\,\pi * f4 * t)] +$$

$$D * \cos(2\,\pi * F1 * t + \Phi\_BLS1) * [m1'''\sin(2\,\pi * f1 * t) +$$

$$m2'''\sin(2\,\pi * f2 * t + \Phi2)]$$

où :

A représente l'amplitude du signal P+BL de fréquence radio F0 ayant une phase $\Phi\_PBL0$,
B représente l'amplitude du signal BLS de fréquence radio F0 ayant une phase $\Phi\_BLS0$,
C représente l'amplitude du signal P+BL de fréquence radio F1 ayant une phase $\Phi\_PBL1$,
D représente l'amplitude du signal BLS de fréquence radio F1 ayant une phase $\Phi\_BLS1$,
F0 et F1 représentent les fréquences des signaux radio fréquence. Dans la suite, Fn désignera un signal radio fréquence de fréquence quelconque,
f1, f2, f3, f4 représentent les fréquences des signaux basse fréquence modulant les signaux radio fréquence F0, F1 et Fn. Dans la suite, fn désignera un signal basse fréquence de fréquence quelconque,
m1, m1', m1'', m1''' représentent le taux de modulation de la basse fréquence fl, généralement f1 = 90 Hz en ILS et 30 Hz en VOR,
m2, m2', m2'', m2''' représentent le taux de modulation de la basse fréquence f2, généralement f2 = 150 Hz en ILS et 9960 Hz en VOR,
Il est à noter que dans le cas du VOR le signal de fréquence f2 est modulé en fréquence et présente donc une équation légèrement différente,
m3, m3', m3'', m3''' représentent le taux de modulation de la basse fréquence f3, généralement f3 = 1020 Hz en ILS et en VOR,
m4, m4', m4'', m4''' représentent le taux de modulation d'un signal phonie dans la bande 300 à 3000 Hz,
$\Phi2$ représente l'écart en phase des signaux BF de fréquence f1= 90 Hz et f2=150 Hz

La difficulté d'analyse des signaux provient du fait que :

- les signaux P+BL et BLS sont sur des fréquences radio identiques. A et B sont à la fréquence F0, C et D sont à la fréquence F1 et ainsi de suite, pour les autres porteuses.
- les signaux BF modulant les voies P+BL et BLS peuvent eux aussi être des fréquences identiques : f1, f2, fn, les taux de modulation étant différents. Le récepteur voit alors un taux de modulation global qui ne lui permet pas de distinguer la part d'un émetteur défaillant.
- dans le cas de plusieurs porteuses à l'intérieur d'un même canal, la différence des fréquences est volontairement limitée à quelques kHz pour profiter de l'effet de capture sur les récepteurs ILS. Cet effet de capture empêche, avec les matériels actuels, d'identifier l'émetteur à l'origine d'un défaut éventuel.

Toutes ces raisons font que les modes de démodulation utilisés s'avèrent inadaptés pour observer les composantes de bases des signaux, et ce à l'intérieur des stations ou a l'extérieur lorsqu'ils sont rayonnés par les antennes.
Les procédés mis en oeuvre actuellement utilisent des canaux de mesure ayant comme caractéristique une démodulation du type quadratique. Le taux de modulation global mesuré ne permet pas d'identifier la part, dans ce taux, d'un émetteur particulier et donc dans ce cas d'identifier celui-ci en cas de défaillance, c'est-à-dire la partie provenant du signal P+BL et la partie provenant du signal BLS. De plus, ils ne permettent pas d'extraire l'information de phase BLS par rapport à P+BL.
Hors démodulation quadratique, un autre procédé est utilisé dans certains équipements pour extraire les informations de phase et de niveau des signaux BLS par rapport aux signaux P+BL. Ces systèmes opèrent en prélevant un signal dit de "référence" sur un des émetteurs de la station et en l'additionnant avec le signal à analyser après lui avoir fait subir plusieurs déphasages connus. Ce principe a au moins deux inconvénients majeurs :

- il nécessite par définition l'utilisation du signal de référence station généré à l'intérieur de l'émetteur et non transmis. De ce fait, il interdit l'utilisation du procédé à une distance quelconque de la station, notamment donc dans les récepteurs de radionavigation embarqués.
- il nécessite la commutation de plusieurs pas d'un phaseur, et ce pour toutes les voies à observer, ce qui interdit le fonctionnement en continu dit "temps réel" car il y a des pertes d'informations entre chaque commutation et entre chaque scrutation d'une voie par rapport aux autres.

Dans le cas de plusieurs porteuses radio, par exemple les stations bifréquences, il n'est pas fait de différence entre les informations propres à chacune des porteuses. Le signal résultant est proportionnel au niveau de champ relatif des porteuses radio. Cette caractéristique des démodulateurs quadratiques est utilisée sous le nom d'effet de capture. Elle permet de rayonner des signaux propres à plusieurs secteurs angulaires aux alentours des stations. Cependant si un signal brouilleur se situe dans le canal sélectionné pour la balise, le signal angulaire de position est dégradé par la présence du brouilleur. Le signal brouilleur peut avoir plusieurs origines, soit un émetteur indépendant de la balise, par exemple une station de radiodiffusion FM, soit la balise elle même, ce phénomène étant connu sous le nom de "multi-trajets". Dans le cas des multi-trajets, le récepteur reçoit un signal composé pour une part d'un signal provenant du "trajet direct" entre lui et la balise et d'autre part de signaux réfléchis par des obstacles, signaux dits "trajet réfléchi". Les procédés actuels ne permettent pas de distinguer signal direct et signal réfléchi.

Toutes ces limitations des équipements actuels restreignent l'efficacité des moyens utilisés pour assurer la maintenance des balises. En outre ces limitations se retrouvent dans les dispositifs de contrôle de l'intégrité des signaux rayonnés, " les moniteurs ", et dans les récepteurs embarqués des systèmes de navigation et en amoindrissent les performances.

**BUTS DE L'INVENTION**

La présente invention a donc pour but de fournir un procédé et un dispositif d'analyse de signaux de radionavigation qui ne présente pas les limitations des procédés et dispositifs connus et qui, en particulier, permettent aux utilisateurs :

- d'obtenir la totalité des paramètres à mesurer sans affecter le fonctionnement des balises en interrompant les signaux radioélectriques transmis aux aéronefs ;
- de localiser le ou les défauts , le ou les variations de paramètres ayant amener ou pouvant provoquer ultérieurement une dégradation des informations transmises aux utilisateurs, sans avoir à exécuter un protocole de mesure complexe ;
- d'enregistrer en temps réel les composantes des signaux transmis et de fournir des informations d'alarme en cas de dépassement des seuils fixés par les normes O.A.C.I. et les utilisateurs, de manière à satisfaire non seulement à ces normes mais également aux recommandations des organismes normalisateurs ;
- de détecter la présence de brouilleurs, de diminuer la susceptibilité à ces brouilleurs, en réduisant ainsi le taux d'erreur des signaux de guidage et en informant les utilisateurs de la présence de ces perturbateurs, les brouilleurs étant indépendants de la balise ou dépendants de la balise, donc "multi-trajets".

La présente invention a aussi pour but de fournir un tel procédé et un tel dispositif mis en oeuvre dans les aéronefs pour la radionavigation proprement dite, et non seulement pour la maintenance et le contrôle de l'intégrité des stations au sol.

On atteint ces buts de l'invention avec un procédé d'analyse de l'émission d'une balise de radionavigation, cette émission étant composée d'au moins une porteuse (P+BL) comprenant des bandes latérales (BL) et d'un signal (BLS) à bandes latérales seules, cette porteuse et ce signal ayant des relations de phase quelconques, caractérisé en ce que :

- on démodule la somme de la porteuse (P+BL) et du signal (BLS) par multiplication d'une part avec une fréquence (F) et, d'autre part, avec cette même fréquence en quadrature de phase,
- on extrait de ces produits les composantes continues représentatives de la partie (P) de la porteuse (P+BL) et les composantes aux fréquences basses de la balise représentatives des parties BL de (P+BL) et BLS,
- on calcule le module et la phase de la partie P de la porteuse (P+BL), et
- on déduit des composantes aux fréquences basses l'amplitude des bandes latérales (BL) et l'amplitude et la phase du signal(BLS).

Grâce à la démodulation à quadrature de phase multifréquence opérée suivant la présente invention, on tire des signaux de radionavigation une information enrichie du fait d'une connaissance approfondie des caractéristiques des composantes de base des signaux de radionavigation, cette information enrichie permettant, suivant l'application envisagée, d'améliorer, soit la maintenance, soit le contrôle de l'intégrité des rayonnements de la balise, soit le guidage des aéronefs.

Pour la mise en oeuvre de ce procédé l'invention fournit un dispositif comprenant :

- a) des moyens multiplicateurs pour démoduler la somme de la porteuse (P + BL) et du signal (BLS) par multiplication d'une part avec une fréquence (F) et, d'autre part, avec cette même fréquence en quadrature de phase,
- b) des moyens de filtrage pour extraire de ces produits les composantes continues représentatives de la partie (P) de la porteuse (P + BL) et du signal BLS,
- c) des moyens de calcul du module et de phase de la partie P de la porteuse (P + BL), de l'amplitude des bandes latérales (BL) et de l'amplitude et de la phase du signal (BLS) à partir des composantes aux basses fréquences de l'émission de la balise.

## DESCRIPTION DES DESSINS

D'autres caractéristiques et avantages de la présente invention apparaîtront à la lecture de la description qui va suivre et à l'examen des dessins annexés dans lesquels :

- la figure 1 est un schéma fonctionnel illustrant le procédé d'analyse de signaux de radionavigation suivant l'invention,
- la figure 2 regroupe plusieurs représentations vectorielles des composantes de base des signaux P+BL et BLS, utiles à la description du procédé suivant l'invention,
- la figure 3 est un schéma fonctionnel d'un mode de réalisation d'un dispositif d'analyse suivant l'invention,
- la figure 4 est un schéma fonctionnel d'un mode de réalisation d'un récepteur de radionavigation équipé du dispositif suivant l'invention,
- la figure 5 est un schéma fonctionnel d'un mode de réalisation d'un outil de diagnostic et de maintenance équipé du dispositif suivant l'invention, ce schéma s'appliquant également à une balise de radionavigation équipée d'un tel outil, et
- la figure 6 est un schéma fonctionnel d'un mode de réalisation d'un coupleur multi-voies suivant l'invention, ce coupleur permettant la mesure de signaux en divers points d'une balise.

Les éléments identiques dans les différentes figures qui assurent les mêmes fonctions portent les mêmes références et ne seront décrits qu'une fois.

## DESCRIPTION DE L'INVENTION

Une balise comprend classiquement un bloc électronique de génération de signaux fournissant les signaux P+BL ET BLS à un bloc de distribution qui alimente lui-même des antennes. Pour contrôler l'émission des antennes, on place des capteurs dans le champ des antennes, ces capteurs alimentant un circuit de recombinaison. Les signaux issus de ce circuit alimentent des canaux moniteurs qui coupent le fonctionnement du bloc d'émission lorsqu'un défaut est détecté en sortie des capteurs. Les signaux émis par la balise sont utilisés dans des récepteurs de radionavigation embarqués dans des aéronefs.

La présente invention réalise une double démodulation c'est-à-dire une démodulation sur une voie en phase dite voie cosinus, et une démodulation sur une voie en quadrature de plan, dite voie sinus. Cette démodulation est réalisée sur autant de fréquences radio qu'il en existe à l'intérieur d'un canal et sur autant de points de mesure qu'il est nécessaire pour établir une localisation de l'origine d'un défaut.

La description qui va suivre concerne d'abord un dispositif d'analyse bifréquence incorporé à un récepteur de radionavigation. On décrira ensuite une balise incorporant plusieurs tels dispositifs installés en autant de points de mesure de la balise.

Le procédé suivant l'invention permet d'analyser directement les signaux émis par les balises, ou après que ces signaux aient subi une ou plusieurs transformations. Ces transformations ont pour but d'adapter les grandeurs physiques du signal analysé à la technologie des dispositifs mettant en oeuvre le procédé suivant l'invention. Ces transformations des signaux rayonnés sont par exemple, une amplification, un mélange avec une fréquence en vue de transposer le signal analysé en une fréquence intermédiaire "FI". Nous emploierons donc dans la suite de la présente description indifféremment le vocable "signal de la balise" ou "signal analysé" comme étant soit le signal rayonné directement par la balise soit le signal transformé.

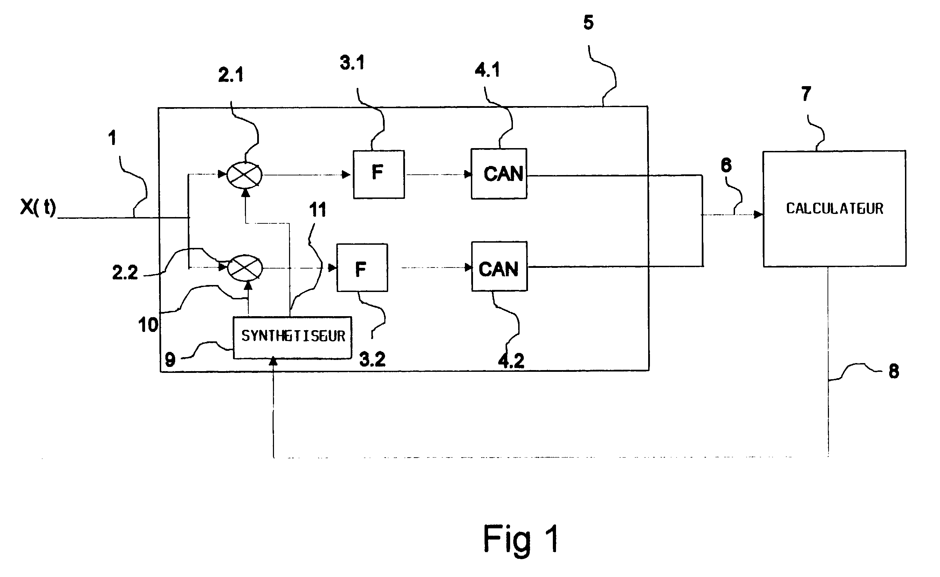

On se réfère à la figure 1 du dessin annexé où l'on a représenté schématiquement le principe qui est à la base du procédé suivant l'invention.

Le signal à analyser du type x(t), dont l'équation est donnée dans le préambule de la présente description, et présent à l'entrée 1, est injecté sur une des entrées de chacun de deux multiplicateurs 2.1 et 2.2. Sur leur deuxième entrée, les multiplicateurs reçoivent les signaux en provenance d'un synthétiseur 9. Ce synthétiseur est par exemple un circuit de synthèse digitale directe "DDS", tout autre dispositif pilotable en fréquence pouvant être utilisé. Ce synthétiseur délivrant classiquement deux porteuses en quadrature dits respectivement "sortie cosinus" et "sortie sinus", le signal sur la sortie cosinus 10 est de fréquence F identique au signal x(t) et le signal sur la sortie sinus 11 est de fréquence F aussi mais en quadrature de phase par rapport au signal 10. Les sorties des multiplicateurs sont injectées dans des filtres passe-bas 3.1 et 3.2. Ces opérations de multiplication et de filtrage constituent une démodulation du signal x(t). Les filtres passe-bas alimentent des convertisseurs analogique-numériques 4.1 et 4.2 .

Traditionnellement, dans les récepteurs connus, les bandes passantes de filtres de fréquence intermédiaire FI sont de plusieurs kHz pour permettre l'utilisation de stations bifréquences et assurer l'effet de capture. La largeur de bande des filtres FI entraîne une grande susceptibilité des récepteurs de radionavigation face aux brouilleurs se trouvant sur les mêmes fréquences. En réduisant, suivant la présente invention, les bandes passantes des filtres passe-bas 3.1 et 3.2 au strict nécessaire, à savoir la basse fréquence BF maximum parmi f1, f2, f3 ou fn, on limite le risque de brouillage. Sur le plan radioélectrique, le rapport signal sur bruit est également amélioré puisqu'il varie suivant la formule 10 Log (B2/B1), B2 étant la nouvelle bande passante et B1 la bande passante classiquement utilisée.

A titre d'exemple pour le "Glide Path", la différence de fréquence des émetteurs peut atteindre 30 kHz soit donc la valeur classique de B1. Les fréquences BF maximum à analyser correspondent à 150 Hz. Suivant l'invention, on prend volontairement un peu de marge sur la fréquence de coupure des filtres 3.1 et 3.2 soit 300 Hz afin de ne pas altérer les mesures sur le signal à 150 Hz, soit une amélioration du gain de 10 * Log (300/30 000), ou 20 dB.

Les données échantillonnées à une fréquence d'échantillonnage, Freq_ech, en sortie des convertisseurs et représentatives du signal x(t) sont transmises à un calculateur numérique 7 par un bus numérique 6. Les données en provenance de la branche du multiplicateur 2.2 alimenté par la sortie cosinus 10 sont arbitrairement dénommées "composantes cosinus" ou "voie cosinus". De même les données de la branche alimentée par la sortie sinus 11 sont dénommées "composantes sinus" ou "voie sinus".

La fonction réalisée, suivant l'invention, par le bloc 5 constitué par les multiplicateurs, le synthétiseur, les filtres passe-bas et les convertisseurs analogiques-numériques est dénommée démodulation à quadrature de phase. Dans le cas ou plusieurs blocs 5 sont connectés en parallèle sur une entrée 1, la fonction est dénommée démodulation multifréquence à quadrature de phase.

Le calculateur pilote le synthétiseur 9 par l'intermédiaire du bus de contrôle 8. Il effectue l'ensemble des traitements nécessaires à l'extraction des composantes de base du signal, en plusieurs étapes :

- recherche des porteuses présentes dans le signal,
- filtrage de la composante continue et des composantes de basses fréquences f1 à fn,
- caractérisation des composantes élémentaires du signal en niveau, phase, fréquence,
- calculs des écarts en fréquence et en niveau des porteuses,
- asservissement des porteuses,
- calculs spécifiques au guidage de l'aéronef équipé d'un récepteur de radionavigation comprenant le dispositif suivant l'invention.

On suppose dans un premier temps, pour plus de clarté, les fréquences du ou des synthétiseurs calées sur les fréquences du signal à analyser. L'étape "recherche des porteuses" sera décrite ultérieurement.

**Filtrage de la composante continue et des composantes de basses fréquences f1 à fn.**

Le procédé d'analyse suivant l'invention peut être exécuté par un traitement analogique ou numérique des signaux en cause.

Pour un traitement analogique, la fonction de filtrage peut être réalisée à l'aide d'un filtre passe-bas pour la composante continue et de plusieurs filtres passe-bande centrés sur les fréquences fl à fn. La sortie de ces filtres est redressée pour fournir un niveau proportionnel aux fréquences filtrées. Chacune des composantes filtrées et redressées est alors échantillonnée et transmise au calculateur qui effectue alors l'ensemble des étapes nécessaires à l'analyse.

Pour un traitement numérique, décrit complètement ci-après à titre d'exemple, plusieurs techniques de filtrage numérique peuvent être employées pour extraire les amplitudes de la composante continue et de chacune des basses fréquences f1 à fn. On utilise, et ce de manière non limitative, une transformée de Fourier rapide "FFT".

On stocke une suite de n échantillons du signal x(t), on multiplie le bloc de n points ainsi constitué par une fonction de pondération et on calcule la transformée de Fourier rapide par les algorithmes connus du domaine. En sortie de ce calcul de FFT, on est alors en présence d'une table de longueur n dont chaque élément représente l'amplitude et dont l'indice de la table représente la fréquence, suivant la relation Fréquence = indice * Freq_ech/n. On choisit judicieusement la fréquence d'échantillonnage, Freq_ech, et le nombre n de points échantillonnés, tels que le résultat de la division de Freq_ech par n soit un sous-multiple des fréquences à analyser. A titre d'exemple non limitatif, les signaux BF des balises ILS et VOR ont une fréquence commune de 30 Hz. Pour améliorer la résolution des filtres équivalents du calcul de la FFT, on utilise un sous-multiple de 30 Hz, par exemple 15 Hz, et on choisit Freq_ech/n = 15 Hz soit Freq_ech = 7680 Hz si n = 512 points.

La fréquence d'analyse maximum de ce bloc est Freq_ech / 2 suivant le théorème de Shannon. Pour analyser la totalité d'un canal, il faut soit utiliser une fréquence d'échantillonnage élevée soit procéder en plusieurs étapes. C'est ce dernier critère qui sera le plus souvent retenu pour minimiser les temps de calcul et profiter des effets de filtrage des filtres passe-bas.

Les valeurs d'amplitude fournies pour chacune des raies fréquentielles sont entachées d'une erreur sur l'amplitude et sur la fréquence. On effectue alors des calculs d'interpolation sur les résultats de la FFT.

Les calculs d'interpolation sont effectués sur la composante continue et sur chacune des fréquences BF analysées pour prendre en compte le fait qu'elles ne sont pas synchrones de la fréquence d'échantillonnage et que leur fréquence propre peut varier dans ou hors des limites fixées par les normes et les recommandations.

Le non-synchronisme des fréquences f1, f2 ... fn par rapport aux raies de fréquences élémentaires données par la relation : Fréquence = indice * Freq_ech/n, issues du calcul de FFT, entraîne des erreurs de mesure et affecte grandement la précision du procédé mis en oeuvre si elles ne sont pas prises en compte. Pour effectuer le calcul d'interpolation, on propose, suivant l'invention, la procédure suivante :

- 1, on calcule $\Delta$_f de base comme $\Delta$_f = Freq_ech / (2 * n),
- 2, on prélève trois échantillons encadrant la fréquence fn à mesurer dans la table des données issues du filtrage. Les échantillons sont d'indice n-1, n et n+1, n étant l'échantillon de fréquence la plus proche de la fréquence de la composante fn recherchée,
- 3, on détermine si la fréquence réelle est supérieure ou inférieure à l'échantillon d'indice central n en comparant les échantillons d'indices n-1 et n+1. Si l'échantillon n+1 est supérieur à l'échantillon n-1, alors la fréquence réelle est supérieure à celle de l'échantillon d'indice n, sinon elle est inférieure,
- 4, on additionne ou on soustrait $\Delta$_f à la fréquence d'indice n,
- 5, connaissant l'équation de la fonction de pondération, on recalcule alors le niveau théorique du signal à partir du niveau de rang n et l'écart en fréquence entre les niveaux de rang n et de rang n $\pm$ $\Delta$_f,
- 6, de ce niveau théorique, on calcule la valeur pour l'échantillon de rang n+1 ou n-1 suivant la position de fn,
- 7, si l'écart entre la valeur calculée et la valeur mesurée d'indice n-1 ou n+1 est inférieur on calcule un nouveau $\Delta$_f, soit ($\Delta$_f / 2) $\pm$ $\Delta$_f,
- 8, on recommence le cycle à l'étape 4, de 6 à 10 fois suivant la précision recherchée.

Ce procédé de recherche par interpolation des maxima permet de trouver les amplitudes et les fréquences réelles des signaux mesurés, même s'ils ne sont pas synchrones de la fréquence d'échantillonnage pour les raisons précitées.

**Caractérisation des composantes élémentaires du signal en niveau, phase, fréquence.**

Cette caractéristique va consister à calculer le module et la phase de la composante P de la porteuse (P + BL) et à déduire des composantes aux fréquences basses, l'amplitude des bandes latérales (BL) et l'amplitude et la phase du signal (BLS).

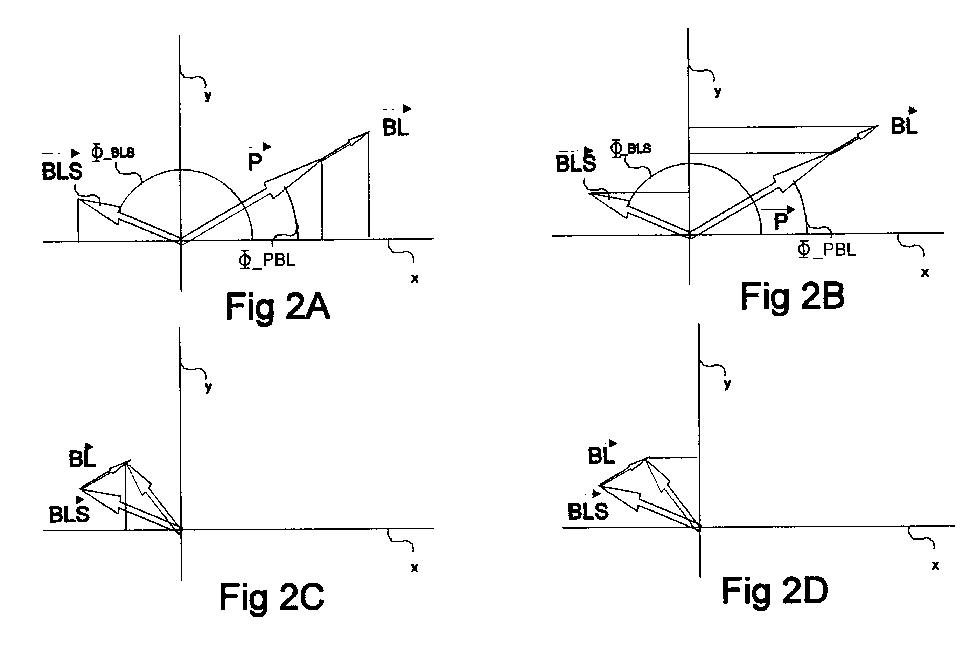

On se réfère aux figures 2A à 2D qui regroupent plusieurs représentations vectorielles des composantes de base des signaux P+BL et BLS, utiles à la description du procédé suivant l'invention.

Un signal P+BL composé de P et BL de phase $\Phi$_PBL est additionné avec un signal BLS de phase $\Phi$_BLS pour former un signal de type x(t). Le nombres des signaux BL, BLS et porteuse P est volontairement limité pour augmenter la clarté du dessin, le principe pouvant être largement étendue à toutes les fréquences contenues dans le canal sélectionné.

La multiplication du signal x(t) par un signal de fréquence F' produit deux signaux l'un à la fréquence F-F' et l'autre à la fréquence F+F' respectivement. La composante de fréquence F+F' est éliminée par l'utilisation des filtres passe-bas.

Si on admet F et F' de fréquence identique, l'amplitude du signal x(t) est alors proportionnelle au cosinus du déphasage entre le signal analysé x(t) à F et le signal mélangeur à F'. On peut voir sur la figure 2A que cette opération a pour effet de projeter les vecteurs $\vec{P}$, $\overrightarrow{BL}$ et $\overrightarrow{BLS}$ sur l'axe x. Les signaux ont alors respectivement pour amplitude cos_P, cos_BL, et cos_BLS définis comme suit :

$$cos\_P = P * cos\ \Phi\_PBL$$

$$cos\_BL = BL * cos\ \Phi\_PBL$$

$$cos\_BLS = BLS * cos\ \Phi\_BLS$$

P, BL et BLS étant les modules des vecteurs correspondants.

De même, sur la figure 2B, le produit d'un signal x(t) à fréquence F avec un signal mélangeur de fréquence F' en quadrature du précédent F' entraînera une projection des vecteurs $\vec{P}$, $\overrightarrow{BL}$, $\overrightarrow{BLS}$ sur l'axe y respectivement en sin_P, sin_BL et sin_BLS définis par les équations ci-dessus en remplaçant l'opérateur cosinus par l'opérateur sinus.

Les amplitudes des composantes de basses fréquences (BF) f1 à fn issues du filtrage de la voie cosinus correspondent à des signaux transposés sur l'axe x des schémas vectoriels des figures 2A à 2D. De même, les amplitudes des composantes BF f1 à fn issues du filtrage de la voie sinus correspondent à des signaux transposés sur l'axe y des schémas vectoriels des figures 2A à 2D.

L'amplitude , c'est-à-dire le module, et la phase des composantes sont alors déterminées pour chacune d'entre elles par des calculs trigonométriques classiques.

Ces calculs sont appliqués pour l'ensemble des composantes BF et RF originaires de la balise analysée, à savoir sur l'ensemble des sorties provenant des différents démodulateurs à quadrature de phase.

Dans le cas particulier des balises ILS, les signaux BL et BLS peuvent être de basses fréquences BF identiques. Ils forment alors un seul et même signal somme et ce pour chaque couple BL/BLS de même fréquence fn. Les projections sur les axes x et y du vecteur somme $\vec{P} + \overrightarrow{BLS}$, figures 2C et 2D, sont respectivement sin_somme figure 2D et cos_somme, figure 2C. Un des buts de l'invention est de déterminer la part de chacune des parties ou composantes BL et BLS dans un tel signal somme. Le calcul pour déterminer respectivement les amplitudes et phases des signaux BL et BLS est alors effectué à partir des caractéristiques du signal BL. Par nature, BL est de phase identique à celle de P.

Si aucun point de mesure particulier n'est disponible, on affectera par défaut un module égal à 0,2.P en "localiser" et 0,4.P en "Glide". Cette valeur sera appelée BL Ref.

Dans le cas d'un dispositif inséré dans une balise, on utilise une des entrées du dispositif judicieusement placée à un endroit ou le signal P+BL n'est pas sommé avec un signal BLS. On affecte le résultat des opérations de calcul de cette voie à BL Ref.

Dans le cas d'un dispositif inséré dans un récepteur embarqué, on utilise une des caractéristiques du signal transmis pour calculer le signal BL Ref. En effet, le signal d'entrée d'un récepteur est la somme des signaux transmis par un ensemble d'antennes. Par définition du système ILS, pour l'axe privilégié de la station "Localiser" à zéro degré d'azimut, plan théorique des points de DDM = 0, et pour l'axe privilégié de la station Glide à savoir son plan de descente, plan théorique des points de DDM = 0, le signal est supposé n'avoir aucune composante BLS. Pendant les phases d'utilisation des ILS, les aéronefs se déplacent continuellement entre des secteurs angulaires ou il y a présence de BLS et les axes privilégiés (plan théorique ou DDM = 0) où il n'y a pas de BLS mais seulement des BL. On détecte alors les moments de passage à 0° de la phase résultante pour stocker la valeur de BL Ref.

Toutefois, si les constituants des balises sont imparfaits, par exemple si les demi-réseaux gauche et droit ne sont pas équilibrés en amplitude ou si le coefficient de réflexion du sol est différent de l'unité, il existe alors dans ces cas des composantes résiduelles de signaux BLS sur les axes privilégiés. La caractéristique essentielle de ces imperfections est que la phase de ces composantes résiduelles est obligatoirement en quadrature par rapport à la phase observée en dehors de ces axes privilégiés, à savoir dans les secteurs angulaires. De plus , les BLS issues de la fréquence 90 Hz sont opposées en phase, par rapport aux BLS issues de la fréquence 150 Hz.

On utilise donc l'instant de la rotation caractéristique de phase relative de ± 90° comme instant de décision pour stocker la valeur de BL Ref. La variation effective sera de 90° à ± ξ°. L'écart ξ° est proportionnel aux imperfections précitées des constituants de la balise et de son environnement.

Après avoir déterminer la valeur BL Ref en phase, identique à P, et en amplitude on détermine ses projections :

$$cos\_ref = module\ BL\ Ref * cos(\Phi\ BL\_ref)$$

$$sin\_ref = module\ BL\ Ref * sin\ (\Phi\ BL\_ref)$$

Les valeurs du signal BLS sont alors déterminées avec les calculs suivants :

$$cos\_BLS = cos\_somme - cos\_ref$$

$$sin\_BLS = sin\_somme - sin\_ref$$

où cos_somme et sinus somme sont respectivement les projections des vecteurs somme des vecteurs $\overrightarrow{BL}$ et $\overrightarrow{BLS}$ en sortie de chaque filtre,

$$Module\ BLS = \sqrt{(cos\_BLS)^2 + (sin\_BLS)^2}$$

et

$$\Phi\_BLS = Arc\ tangente\ (sin\_BLS\ /\ cos\_BLS)$$

On détermine enfin la différence de phase entre les porteuses et les signaux BLS :

$$\Delta\_\Phi = \Phi\_BLS - \Phi\_PBL$$

Ces calculs sont effectués pour la totalité des signaux de base générés par la station analysée. A ce titre on pourra effectuer les traitements pour les harmoniques des signaux de base pour déterminer de quel émetteur ils sont issus.

**Recherche des porteuses présentes dans le signal et asservissement des porteuses**

Dans ce qui précède, on a supposé les fréquences de synthétiseurs calées sur les fréquences du signal à analyser. Pour ce faire, il faut d'abord rechercher les porteuses présentes dans le signal x(t) et accorder les fréquences des synthétiseurs sur ces porteuses.

Cet accord est un accord en fréquence. Le procédé suivant l'invention ne nécessite pas un accord en phase. L'accord sera obtenu aisément par l'analyse du calculateur. On pourrait de même utiliser un système analogique avec des boucles à verrouillage de phase accordées sur chacune des porteuses contenues dans x(t).

On recherche la valeur de fréquence ayant le maximum de niveau dans un bloc de données issu de la fonction filtrage. On recherche de part et d'autre de cette fréquence F la présence d'une ou plusieurs BL ou BLS à (F - fn) et (F+fn). Si on obtient au moins une des fréquence BL ou BLS recherchées, on mémorise l'amplitude et la fréquence F et l'amplitude de la BL. On décale la fréquence du synthétiseur d'une valeur égale au double de la largeur des filtres passe-bas, et on recommence la séquence jusqu'à ce que le nombre de bandes analysées correspondent à la largeur du canal de la balise.

Une fois la recherche des porteuses terminée, on sélectionne les deux porteuses ayant le niveau le plus fort et on cale les synthétiseurs sur ces fréquences. Les séquences de calcul des composantes P, BL, BLS sont alors effectuées en permanence. Les autres porteuses détectées contenant des composantes BL ou BLS révèlent alors la présence de brouilleurs.

Bien entendu, de nombreuses variantes sont à la portée de l'homme de l'art. Par exemple, on pourra effectuer cette étape de recherche des porteuses en permanence par un démodulateur spécialisé. De même, on pourra effectuer cette séquence de recherche à la mise en route du dispositif suivant l'invention, puis on utilisera les écarts en fréquence constatés lors des calculs d'interpolation pour recaler les synthétiseurs, étape que l'on dénomme "asservissement des porteuses".

A ce stade des opérations, L'équation du signal x(t) est donc connue pour toutes ces composantes de base. C'est à dire que chaque composante P, BL, BLS est connue par son amplitude, sa phase, sa fréquence BF ou RF. Des calculs complémentaires sont alors effectués par les dispositifs mettant en oeuvre le procédé suivant la présente invention, en prenant comme base les valeurs caractéristiques des signaux de bases tel qu'ils ont été analysés jusqu'à ce point.

Si on utilise un seul démodulateur, on effectue alternativement le calage sur chaque porteuse présente dans le canal de la balise. De ce fait, on perd la notion de temps réel correspondant à l'analyse en continu des différentes porteuses présentes dans le canal.

**Calculs spécifiques au guidage**

On détermine les informations de navigation, d'écart angulaire, à partir des composantes élémentaires analysées précédemment, suivant deux méthodes. La première méthode consiste à fournir une information telle qu'elle serait issue d'un système ou procédé connu à base d'un démodulateur quadratique. "DDM" représente la différence des modulations, et "SDM" la somme des modulations, comme cela est bien connu. Pour ce faire, on détermine dans le cas d'une balise ILS, pour chaque fréquence radio Fn un taux de modulation, M90 et M 150 correspondant à f1 = 90 Hz et f2 = 150 Hz dans l'équation x(t), tels que :

- M90 = (m1 + m'1 * cos $\Delta\Phi\_90$)
- M150 = (m2 + m'2 * cos $\Delta\Phi\_150$)
- DDM_Fn = M90 - M150
- SDM_Fn = M90 + M150

$\Delta\Phi\_90$ et $\Delta\Phi\_150$ représentant la différence de phase entre les signaux BLS et P+BL respectivement générés par les signaux à f1 = 90 Hz et f2 = 150 Hz. Ces angles de phase sont les valeurs instantanées issues de chacun des blocs de données en sortie du calcul de la FFT, et ce pour les deux porteuses de niveau le plus fort dans le canal analysé F0 et F1,

On calcule ensuite :

- le rapport K = amplitude de F1 / amplitude de F0
- puis les informations de guidage proprement dites résultant de l'effet de capture :

$$DDM\ guidage = (DDM\_F0 + DDM\_F1 * K) / (1 + K^2)$$

$$SDM\ guidage = (SDM\_F0 + SDM\_F1 * K) / (1 + K^2)$$

où DDM_F0 et SDM_F0 se rapportent à la porteuse de fréquence F0 dans l'équation x(t) et DDM_F1 et SDM_F1 à la fréquence F1 dans x(t). Ces informations de guidage sont qualifiées de "standard".

La deuxième méthode consiste à fournir à l'utilisateur des informations de guidage enrichies des caractéristiques obtenues par le procédé suivant l'invention.

On calcule de manière classique les taux de modulation M90 et M150 en prenant cette fois-ci les angles $\Delta\Phi\_90$ et $\Delta\Phi\_150$, non pas comme les valeurs instantanées après un filtrage de type FFT, mais comme la moyenne sur une suite d'opérations de filtrage. Pour le calcul de la moyenne on complémente les angles $\Delta\Phi$ de $\pm$ 90° si les acquisitions correspondent à des points physiques de DDM = 0. Une autre solution consiste à ne pas les prendre en compte. Le fait d'opérer un filtrage, dans notre cas par moyenne, toute autre technique pouvant convenir, sur les déphasages successifs des signaux BLS par rapport à P, permet de diminuer considérablement les erreurs de guidage amenées par les signaux "multi-trajets", erreur connue sous le nom de "scalloping". On calcule ensuite l'effet de capture en incorporant une fonction de test, soit une comparaison à un seuil prédéterminé de l'information de DDM de la raie porteuse de champ le plus fort. Si la DDM de champ le plus fort est inférieure en valeur absolue au seuil prédéterminé, on prend :

DDM guidage = DDM de la raie de champ le plus fort
SDM guidage = SDM de la raie de champ le plus fort.

Sinon, on effectue le calcul d'effet de capture "standard".

Cette méthode permet d'éliminer les erreurs de guidage amenées par les signaux multi-trajets de type bifréquence bien connus comme entraînant au moins une erreur d'offset de la DDM guidage.

Pour les signaux de guidage de type VOR, on effectue les calculs connus du domaine consistant à mesurer l'écart de phase entre le signal BF 30 Hz VAR et le signal 30 Hz Ref issu de la démodulation en fréquence des bandes latérales 9960 Hz.

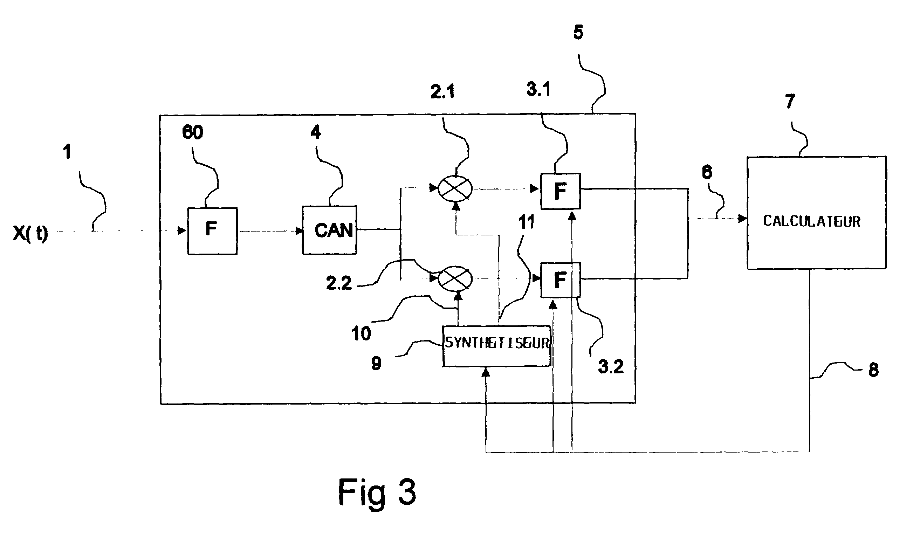

On se réfère maintenant à la figure 3 du dessin annexé où l'on a représenté un mode de réalisation d'un dispositif numérique de démodulation à quadrature de phase suivant l'invention.

Le dispositif comprend un filtre passe-bas anti-repliement 60, un convertisseur analogique-numérique 4, deux multiplicateurs numériques 2.1 et 2.2, deux filtres numériques 3.1 et 3.2, un calculateur 7, un synthétiseur constitué par un oscillateur commandé numériquement 9, deux bus numériques 6 et 8.

On injecte le signal x(t) dans l'entrée 1 et on le filtre à l'aide du filtre passe-bas 60, qui sert de filtre anti-repliement. On échantillonne le signal x(t) avec le convertisseur analogique-numérique 4. En disposant ainsi le convertisseur en amont des multiplicateurs, on s'affranchit suivant l'invention des dérives en température et des dissymétries éventuelles des deux multiplicateurs et des sorties de l'oscillateur 9. La suite des échantillons numériques représentant le signal x(t) est alors multipliée sur une voie cosinus par un multiplicateur 2.2 et sur une voie sinus par un multiplieur 2.1. On alimente les entrées des multiplicateurs 2.2 et 2.1, suivant l'invention, par des signaux de fréquence F en quadrature. Les signaux F sont issus d'un oscillateur commandé numériquement NC0 9. On filtre les voies sinus et cosinus à l'aide de filtres numériques passe-bas à sous-échantillonnage 3.1 et 3.2. Ces filtres sont réglables en largeur et parfaitement identiques sur les deux voies. On transmet le signal au calculateur 7 par le bus numérique 6. Le flot des données arrivant au calculateur est dans un rapport N comparé au flot des données disponible en sortie du convertisseur, le rapport N étant fixé au niveau des filtres numériques en fonction des capacités de traitement disponibles sur le calculateur sélectionné. On réalise l'analyse des signaux de base suivant le procédé selon l'invention. On pilote l'oscillateur 9 à l'aide du bus de commande 8, depuis le calculateur 7.

Le démodulateur numérique à quadrature de phase 5 est composé du filtre anti-repliement, du convertisseur analogique-numérique, de deux multiplicateurs, des deux filtres numériques passe-bas et de l'oscillateur.

On pourra judicieusement réaliser l'ensemble des fonctions de démodulation numérique et d'analyse suivant le procédé de l'invention, directement par traitement logiciel à l'intérieur du calculateur 7 pour peu que celui-ci ait une puissance de traitement suffisante, la partie matérielle étant alors limitée au filtre anti-repliement, au convertisseur analogique-numérique et au calculateur.

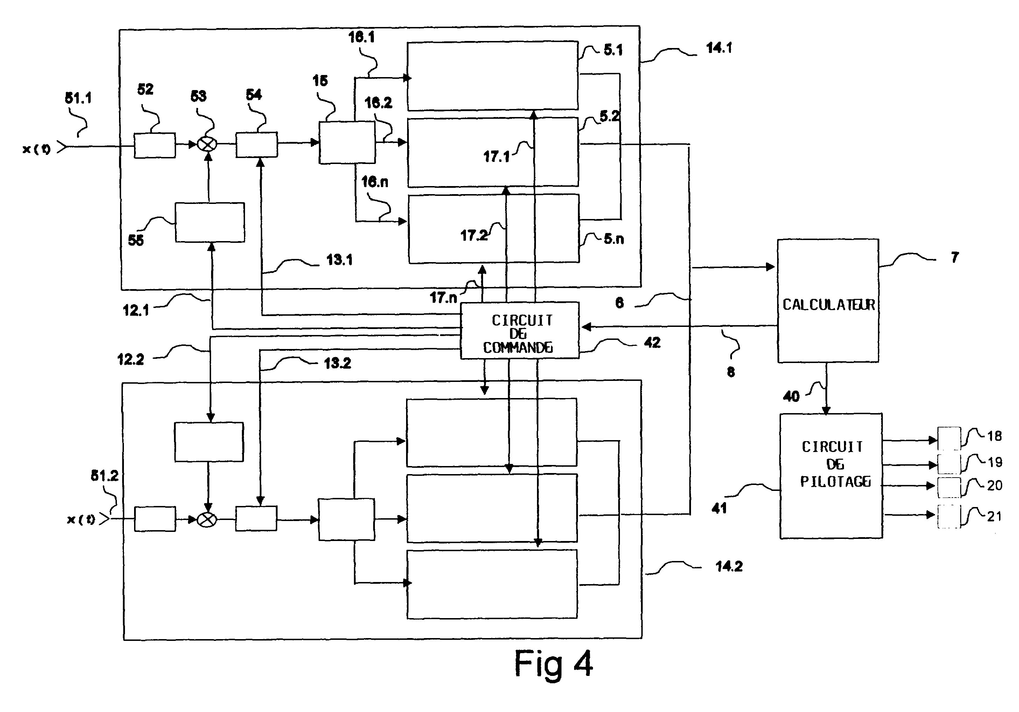

On se réfère à la figure 4 en annexe décrivant un schéma fonctionnel d'un mode de réalisation d'un récepteur de radionavigation équipé du dispositif suivant l'invention.

Le récepteur comprend une pluralité de canaux de mesure 14.1 à 14.n. D'une manière classique, chaque canal comprend un filtre de bande 52, un mélangeur 53, un synthétiseur de canaux 55. Ce synthétiseur peut être remplacé par un simple oscillateur si le récepteur est utilisé sur un seul canal. Le récepteur comprend également un bus 40 raccordant le calculateur 7 à un circuit de pilotage 41 et un circuit de commande 42 des différents modules. Suivant l'invention, on trouve encore une pluralité de démodulateurs à quadrature de phase 5.1 à 5.n, et un circuit d'adaptation et division 15.

On injecte le signal x(t) en provenance des balises "localiser" et VOR dans l'entrée 51.1 du canal VHF 14.1. On injecte le signal x(t) en provenance des balises "Glide" dans l'entrée 51.2 du canal UHF 14.2.

A l'intérieur des canaux 14.1 et 14.2 :

- on filtre le signal x(t) à l'aide d'un filtre passe-bande 52,
- on transpose en une fréquence intermédiaire le signal x(t) à l'aide du mélangeur 53 et du synthétiseur de canal 55,
- on amplifie le signal x(t) transposé par un circuit à gain variable 54,
- on divise le signal issu de l'amplificateur à l'aide du circuit diviseur 15 en un nombre n de voies 16.1 à 16.n. Les n voies correspondent à chaque porteuse F contenue dans le signal, y compris d'éventuels signaux brouilleurs,
- on démodule les n voies à l'aide de démodulateurs numériques 5.1 à 5.n à quadrature de phase suivant l'invention,
- on transmet les n voies démodulées au calculateur 7 par le bus numérique 6,
- on transmet les commandes de consigne, depuis le calculateur 7, à l'unité de commande 42 par le bus numérique de commande 8. Les bus 6 et 8 peuvent être un seul et même bus,
- on transmet les commandes depuis le circuit 42, au synthétiseur 55 de canal par le bus 12.1, à l'amplificateur 54 à gain variable par le bus 13.1, au NC0 des démodulateurs 5.1 à 5.n par les bus $17_1$ à $17_n$,
- on exécute les séquences de calcul suivant l'invention pour les canaux 14.1 et 14.2 et on transmet au système de pilotage les indications de guidage affichées en 18,19,20 et 21, par l'intermédiaire du circuit 41 piloté par le calculateur. Le circuit de pilotage 41 est composé par exemple de convertisseurs numérique-analogiques avec leur circuits associés pour alimenter les entrées standard des indicateurs et systèmes de pilotage, entre autres les indicateurs d'écart azimut 18 et site 17 et les indicateurs de défaut Flag azimut 20 et Flag site 21,
- on utilise les valeurs des composantes de base de l'équation du signal x(t) ,c'est-à-dire chaque composante P, BL, BLS décrite par son amplitude, sa phase, sa fréquence BF ou RF, issues des traitements suivant l'invention pour effectuer, en plus des calculs spécifiques de guidage, les calculs propres au récepteur. Pour ceux-ci :
- on calcule l'écart en fréquence des porteuses sélectionnées. Celles-ci sont stockées dans la table des fréquence recherchées. On compare l'écart en fréquence aux normes en vigueur et on déclenche une alarme Flag si l'écart est hors norme ;

- on calcule l'écart en niveau des porteuses sélectionnées. Celles-ci sont stockées dans la table des fréquence recherchées. On compare l'écart en niveau aux normes en vigueur et on déclenche une alarme Flag si l'écart est hors norme ;
- on détermine si le nombre des porteuses présentes dans le canal est supérieur au nombre attendu et dans ce cas on affiche une alarme Flag ce qui correspond à la détection d'un signal brouilleur ;
- on ajuste la largeur des filtres passe-bas des démodulateurs au plus juste des bandes passantes nécessaires pour améliorer le rapport signal à bruit connu sous le nom de C/N ;
- on effectue les calculs spécifiques au guidage.

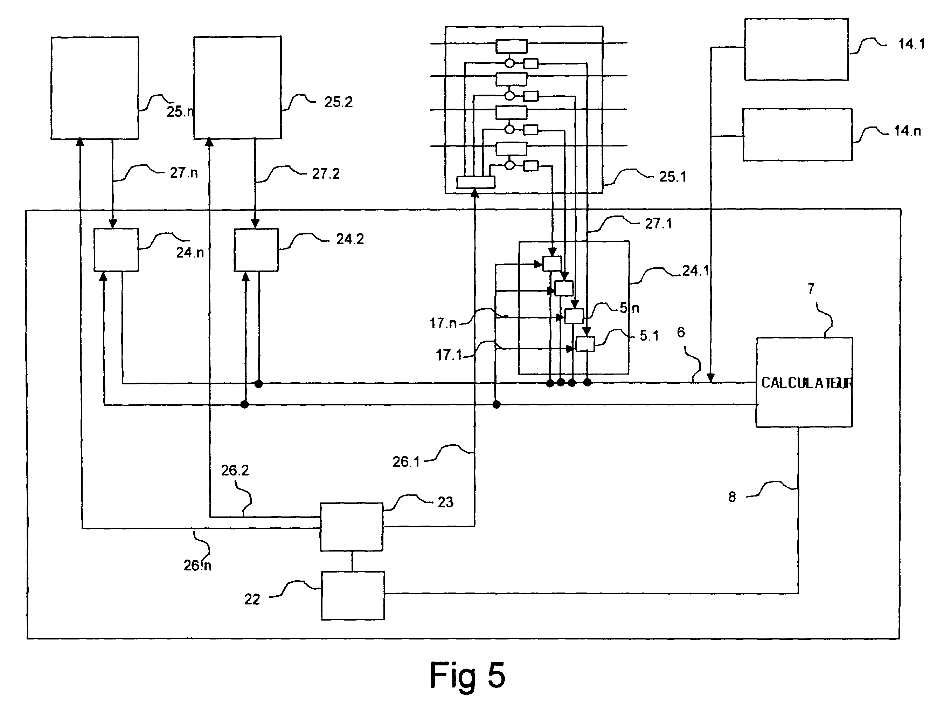

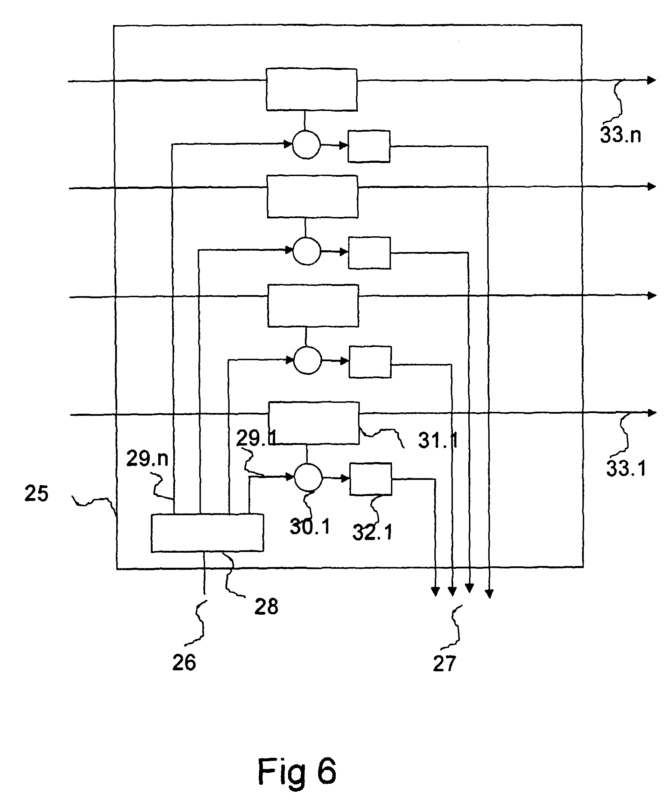

La présente invention permet aussi de réaliser un outil de diagnostic et de maintenance de balise propre à contrôler l'intégrité des signaux émis par la balise. Cet outil représenté à la figure 5, reprend pour l'essentiel la structure de récepteur de navigation décrite en liaison avec la figure 4. L'outil comprend cependant en outre une pluralité de coupleurs multi-voies connectés entre les différents blocs fonctionnels des stations pour localiser d'éventuels défauts. La figure 6 représente en détail un bloc de coupleurs multi-voies intégré au dispositif de maintenance de la figure 5.

On se réfère à la figure 5 du dessin annexé qui représente un schéma fonctionnel d'un mode de réalisation de l'outil de diagnostic et de maintenance suivant l'invention, ce schéma s'appliquant également à un mode de réalisation d'un dispositif de contrôle de l'intégrité des signaux rayonnés par les balises, intégrables à ces dernières.

L'outil de diagnostic comprend :

- des canaux de mesure 14.1 à 14.n tels que décrits en liaison avec la figure 4. Ceux-ci mesurent des signaux rayonnés par la balise, en divers points du champ de cette balise. Les signaux reçus par ces canaux sont délivrés au calculateur 7 où ils sont exploités pour diagnostiquer des défauts extérieurs à la balise (variation du coefficient de réflexion du plan de sol, des coefficients de transmission des antennes, de l'inclinaison de leur mât de support, etc...) ;
- une pluralité de blocs (25.1 à 25.n) de coupleurs multi-voies ;
- une pluralité de blocs 24.1 à 24.n de démodulateurs à quadrature de phase;
- un synthétiseur 22 pour la sélection du canal de la balise ;
- un circuit diviseur 23 ;
- un calculateur 7;
- différents bus numériques de commande 8, 17.1 à 17.n et de liaison 6, 27.1 à 27.n.

Les coupleurs multi-voies, du type électromagnétique classique par exemple, sont placés entre les différents blocs fonctionnels de la balise, tels qu'on les a énoncés en préambule de la présente description. Il s'agit en effet, suivant l'invention, de localiser dans l'un ou l'autre de ces blocs, des défauts de fonctionnement de la balise.

On cale le synthétiseur 22 sur le canal de la balise. On divise le signal issu du synthétiseur, à l'aide du diviseur 23, en un nombre de sorties identique au nombre de coupleurs multi-voies nécessaires pour localiser un éventuel défaut dans la balise. On prélève les signaux transposés à l'intérieur des blocs de coupleurs multi-voies 25.1 à 25.n et on les injecte dans des démodulateurs à quadrature de phase 5.1 à 5.n.

Pour plus de clarté, on a représenté un seul des blocs de démodulateurs à quadrature de phase pour une des voies de mesure seulement. On dispose autant de démodulateurs par voie qu'il est nécessaire, en fonction de la balise. De manière générale, 2 démodulateurs sont installés par voie pour les balises bi-fréquences. On pourra remplacer le circuit diviseur par un circuit commutateur à une entrée et autant de sorties que de coupleurs. Cette possibilité permet de diminuer la puissance nécessaire en sortie du synthétiseur de canal. On pourra intercaler des circuits multiplexeurs entre les sorties des blocs de coupleurs multi-voies 25.1 à 25.n et les entrées des démodulateurs 5.n pour réduire le nombre de ces derniers.

A chaque fois que l'on insère un circuit de commutation ou de multiplexage, on perd la notion de temps réel relative à l'analyse, sans perte d'information des différents signaux analysés. On effectue à l'aide du calculateur 7 les traitements conformes à l'invention. Les signaux sont prélevés en amont et en aval de chacun des blocs fonctionnels composant les stations, à l'aide des coupleurs multi-voies, ce qui permet de localiser les éventuels défauts ou dérives. Pour ce faire, on compare les valeurs calculées à partir des nouveaux échantillons avec des valeurs de calcul précédemment mémorisées, ou à des valeurs de consigne fixées par l'utilisateur. Si des écarts sont constatés, on affecte l'origine du défaut au bloc considéré.

On se réfère à la figure 6 du dessin annexé représentant un schéma fonctionnel de l'un (25)des blocs coupleurs multi-voies formant partie du dispositif de la figure 5.

Le bloc de coupleurs multi-voies de la figure 6 comprend un circuit diviseur 28 et, pour chacune des branches de mesure 29.1 à 29.n connectée aux sorties du diviseur, un multiplicateur 30.i, un coupleur 31.i proprement dit, du type électromagnétique par exemple, et un filtre passe-bas 32.i (i = 1 à n).

On divise l'entrée "oscillateur local" 26, signal "OL", en un nombre de branches 29.i correspondant au nombre de voies à analyser. Les voies sont généralement au nombre de 2,3 ou 4, sans limitation pour le maximum utilisable. On prélève une partie du signal de la voie de mesure 33.i avec un coupleur 31.i. On mélange le signal prélevé avec le signal 29.i issu du diviseur 28 placé sur l'entrée "OL" 26. On élimine du mélange, à l'aide du filtre passe-bas 32.i, la fréquence somme, et on conserve la fréquence différence appelée FI qui est injectée dans le démodulateur à quadrature de phase.

Les signaux analysés présents sur les voies 33.i sont donc transposés sur une fréquence intermédiaire FI plus faible que la fréquence de station, sur les sorties 27 des coupleurs. Cette transposition présente l'avantage de ne pas affecter les phase relatives entre les voies de mesure, d'une erreur due aux différences de longueurs relatives des câbles de liaison entre les coupleurs multi-voies et les démodulateurs à quadrature de phase. De plus, ce changement de fréquence permet de se prémunir contre des couplages parasites entre les points de mesure et les démodulateurs par les rayonnements de la station, ce qui affecterait la précision du dispositif.

## Revendications

1. Procédé d'analyse de l'émission d'une balise de radionavigation, cette émission étant composée d'au moins une porteuse (P+BL) comprenant des bandes latérales (BL) et d'un signal (BLS) à bandes latérales seules, cette porteuse et ce signal ayant des relations de phase quelconques caractérisé en ce que :

   - on démodule la somme de la porteuse (P+BL) et du signal (BLS) par multiplication d'une part avec une fréquence (F) et, d'autre part, avec cette même fréquence en quadrature de phase,
   - on extrait de ces produits les composantes continues représentatives de la partie (P) de la porteuse (P+BL) et les composantes aux fréquences basses de l'émission de la balise représentatives des parties BL de la porteuse (P+BL) et du signal (BLS),
   - on calcule le module et la phase de la partie P de la porteuse (P+BL), et
   - on déduit des composantes aux fréquences basses l'amplitude des bandes latérales (BL) et l'amplitude et la phase du signal (BLS).

2. Procédé suivant la revendication 1, mis en oeuvre dans un récepteur de guidage embarqué dans un aéronef pour élaborer des signaux de guidage DDM et SDM, caractérisé en ce que l'on détermine l'amplitude et la phase des signaux BL et BLS de même basse fréquence BF en utilisant une rotation caractéristique de la phase du signal BLS par rapport à celle du signal (P+BL) intervenant quand l'aéronef traverse le plan théorique de DDM nulle.

3. Procédé suivant la revendication 1, mis en oeuvre dans un récepteur de guidage embarqué dans un aéronef pour élaborer des signaux de guidage DDM et SDM, caractérisé en ce qu'on identifie la DDM de guidage à la DDM tirée de la porteuse (P+BL) de champ le plus fort.

4. Procédé suivant la revendication 1, appliqué au guidage d'un aéronef par exploitation de signaux DDM et SDM tirés d'un traitement des signaux émis par la balise, caractérisé en ce qu'on détermine les informations DDM et SDM en filtrant en phase les signaux (BLS) et (P+BL).

5. Procédé suivant l'une quelconque des revendications 1 à 4, caractérisé en ce qu'on détermine les porteuses contenant des informations (BL) ou (BLS) à l'intérieur d'un canal de balise, pour déterminer la présence de brouilleurs.

6. Dispositif pour la mise en oeuvre du procédé conforme à la revendication 1, caractérisé en qu'il comprend :

   - a) des moyens multiplicateurs (2.1, 2.2) pour démoduler la somme de la porteuse (P + BL) et du signal (BLS) par multiplication d'une part avec une fréquence (F) et, d'autre part, avec cette même fréquence en quadrature de phase,
   - b) des moyens de filtrage pour extraire de ces produits les composantes continues représentatives de la partie (P) de la porteuse (P + BL) et les composantes aux fréquences basses de l'émission de la balise représentatives des parties BL de la porteuse (P + BL) et du signal BLS, et
   - c) des moyens de calcul (7) du module et de la phase de la partie P de la porteuse (P + BL), de l'amplitude des bandes latérales (BL) et de l'amplitude et de la phase du signal (BLS) à partir des composantes aux basses fréquences de l'émission de la balise.

**7.** Dispositif conforme à la revendication 6, caractérisé en ce qu'il comprend un convertisseur analogique-numérique (4) de conversion des signaux reçus de la balise, ce convertisseur étant placé en amont des multiplicateurs (2.1, 2.2).

**8.** Dispositif conforme à la revendication 7, caractérisé en ce qu'il comprend des filtres numériques réglables (3.1, 3.2) en sortie des multiplicateurs (2.1, 2.2) pour éliminer le signal somme formé en sortie des multiplicateurs.

**9.** Dispositif conforme à l'une quelconque des revendications 6 à 8, caractérisé en ce qu'il comprend plusieurs démodulateurs (5.1 à 5.n) à quadrature de phase, asservis chacun à une des porteuses présentes dans l'émission de la balise, l'un au moins desdits démodulateurs étant affecté à la détection de brouilleurs.

**10.** Récepteur de radionavigation équipé du dispositif conforme à l'une quelconque des revendications 6 à 9.

**11.** Dispositif conforme à l'une quelconque des revendications 6 à 9, caractérisé en ce que les sorties des démodulateurs (5.1 à 5.n) de chaque bloc sont traitées dans les moyens de calcul (7) pour identifier et quantifier d'éventuels défauts de fonctionnement de certains blocs fonctionnels de la balise.

**12.** Dispositif conforme à la revendication 11, caractérisé en ce qu'il comprend en outre une pluralité de canaux de mesure (14.1 à 14.n) de signaux rayonnés par la balise, en divers points du champ de cette balise, lesdits signaux étant introduits dans les moyens de calcul (7) pour diagnostiquer des défauts extérieurs à la balise.

**13.** Dispositif conforme à l'une quelconque des revendications 11 et 12, caractérisé en ce qu'il comprend une pluralité de blocs (25.1 à 25.n) de coupleurs connectables chacun à un desdits points de mesure de la balise, chaque bloc de coupleurs comprenant des moyens de transposition (26, 30.1 à 30.n, 32.1 à 32.n) de la fréquence des signaux de la balise en une pluralité de fréquences intermédiaires (FI).

**14.** Balise de radionavigation, caractérisée en ce qu'elle est équipée d'un dispositif conforme à l'une quelconque des revendications 11 à 13, pour le diagnostic et le contrôle de l'intégrité des signaux qu'elle émet.

**Patentansprüche**

**1.** Verfahren zur Untersuchung der Ausstrahlung einer Bake der Funknavigation, wobei diese Ausstrahlung aus wenigstens einer, Seitenbänder (BL) umfassenden Trägerfrequenz (P+BL) und einem nur Seitenbänder aufweisenden Signal (BLS) besteht, wobei die Trägerfrequenz und das Signal in irgendeiner Phasenbeziehung zueinander stehen,
dadurch gekennzeichnet,

- daß die Summe aus der Trägerfrequenz (P+BL) und dem Signal (BLS) durch Multiplikation einerseits mit einer Frequenz (F) und andererseits mit der gleichen, jedoch um 90° phasenverschobenen Frequenz demoduliert wird,
- daß aus diesen Produkten die charakteristischen Gleichspannungskomponenten des Teils (P) der Trägerfrequenz (P+BL) und die charakteristischen niederfrequenten Komponenten der Ausstrahlung der Bake, die für die Teile (BL) der Trägerfrequenz (P + BL) und das Signal (BLS) repräsentativ sind, ausgefiltert werden,
- daß der Modul und die Phase des Teils (P) der Trägerfrequenz (P+BL) berechnet werden, und
- daß von den niederfrequenten Komponenten die Amplitude der Seitenbänder (BL) sowie die die Amplitude und die Phase des Signals (BLS) abgeleitet werden.

**2.** Verfahren nach Anspruch 1, welches bei einem, in einem Luftfahrzeug befindlichen Führungsempfänger angewendet wird, und zwar zur Bildung der Führungssignale DDM und SDM,
dadurch gekennzeichnet,

- daß die Amplitude und die Phase der die gleiche Niederfrequenz (BF) aufweisenden Signale (BL) und (BLS) bestimmt werden, indem eine charakteristische Phasendrehung des Signals (BLS) im Verhältnis zu dem Signal (P+BL) benutzt wird, die auftritt, sobald das Luftfahrzeug die theoretische Ebene DDM Null durchquert.

**3.** Verfahren nach Anspruch 1, welches bei einem, in einem Luftfahrzeug befindlichen Führungsempfänger angewendet wird, und zwar zur Bildung der Führungssignale DDM und SDM

dadurch gekennzeichnet,

- daß das Führungssignal DDM anhand eines Signals DDM identifiziert wird, welches der das stärkste Feld aufweisenden Trägerfrequenz (P+BL) entnommen ist.

4. Verfahren nach Anspruch 1, angewandt auf die Führung eines Luftfahrzeugs, indem die aus der Aufbereitung der durch die Bake abgestrahlten Signale herrührenden Signale DDM und SDM ausgewertet werden, dadurch gekennzeichnet,

- daß die Informationen DDM und SDM durch Phasenfilterung der Signale (BLS) und (P+BL) ermittelt werden.

5. Verfahren nach einem der Ansprüche 1 bis 4, dadurch gekennzeichnet,

- daß die, die Informationen (BL) und (BLS) enthaltenden Trägerfrequenzen in einem Kanal der Bake ermittelt werden, um die Anwesenheit von Rauschsignalen zu ermitteln.

6. Vorrichtung zur Durchführung des Verfahrens gemäß Anspruch 1, gekennzeichnet durch

- (a) Multiplikatormittel (2.1, 2.2) zur Demodulierung der Summe aus der Trägerfrequenz (P+BL) und dem Signal (BLS), indem eine Multiplikation einerseits mit einer Frequenz (F) und andererseits mit der gleichen, jedoch um 90° phasenverschobenen Frequenz durchgeführt wird,
- (b) Filtermittel, um aus diesen Produkten die charakteristischen Gleichspannungskomponenten des Teils (P) der Trägerfrequenz (P+BL) und die charakteristischen niederfrequenten Komponenten der Ausstrahlung der Bake, die für die Teile (BL) der Trägerfrequenz (P+BL) und das Signal (BLS) repräsentativ sind, auszufiltern,
- (c) Mittel (7) zur Berechnung des Moduls und der Phase des Teils (P) der Trägerfrequenz (P+BL), der Amplitude der Seitenbänder (BL) und der Amplitude sowie der Phase des Signals (BLS) ausgehend von den niederfrequenten Komponenten der Ausstrahlung der Bake.

7. Vorrichtung nach Anspruch 6, dadurch gekennzeichnet,

- daß sie einen Analog-Digital-Wandler (4) zur Umwandlung der von der Bake empfangenen Signale umfaßt, wobei dieser Wandler - in Richtung des Informationsflusses gesehen - vor den Multiplikatoren (2.1; 2.2) angeordnet ist.

8. Vorrichtung nach Anspruch 7, dadurch gekennzeichnet,

- daß sie am Ausgang der Multiplikatoren (2.1,2.2) steuerbare digitale Filter (3.1, 3.2) aufweist, um das gebildete Summensiganal am Ausgang der Multiplikatoren zu eliminieren.

9. Vorrichtung nach einem der vorangegangenen Ansprüche 6 bis 8, dadurch gekennzeichnet,

- daß sie mehrere Quadraturdemodulatoren (5.1 bis 5.n) aufweist, deren jeder auf eine der in den ausgestrahlten Signalen der Bake enthaltenen Trägerfrequenzen eingestellt ist, wobei wenigstens einem der Demodulatoren die Entdeckung von Rauschsignalen zugewiesen ist.

10. Empfänger für die Funknavigation, der mit einer Vorrichtung nach einem der vorangegangenen Ansprüche 6 bis 9 ausgerüstet ist.

11. Vorrichtung nach einem der vorangegangenen Ansprüche 6 bis 9, dadurch gekennzeichnet,

- daß die Ausgänge der Demodulatoren (5.1 bis 5.n) einer jeden Baugruppe mittels der Berechnungsmittel (7) behandelt werden, um eventuelle Funktionsfehler bestimmter Funktionsblöcke der Bake zu identifizieren und zu quantifizieren.

12. Vorrichtung nach Anspruch 11,
dadurch gekennzeichnet,

- daß sie eine Vielzahl von Meßkanälen (14.1 bis 14.n) für die durch die Bake ausgestrahlten Signale, und zwar an verschiedenen Punkten des Feldes dieser Bake aufweist, wobei die Signale in die Berechnungsmittel (7) zur Diagnose äußerer Fehler der Bake eingeführt werden.

13. Vorrichtung nach einem der Ansprüche 11 und 12,
dadurch gekennzeichnet,

- daß sie eine Vielzahl von Baugruppen (25.1 bis 25.n) mit Kopplem aufweist, deren jeder mit einem der genannten Meßpunkte der Bake verbindbar ist, wobei jede Kopplerbaugruppe Mittel zur Umsetzung (26, 30.1 bis 30.n, 32.1 bis 32.n) der Frequenz der Signale der Bake in eine Vielzahl von Zwischenfrequenzen (FI) aufweist.

14. Bake für die Funknavigation,
dadurch gekennzeichnet,

- daß sie mit einer Vorrichtung nach einem der vorangegangenen Ansprüche 11 bis 13 für die Diagnose und die Kontrolle der Unversehrtheit der ausgestrahlten Signale ausgerüstet ist.

## Claims

1. Method of analysing transmissions from a radio navigation beacon, these transmissions comprising at least one carrier (C+SB) comprising side bands (SB) and a side band only signal (SBO), said carrier and said signal having any phase relationship, wherein:

   - the sum of the carrier (C+SB) and the signal (SBO) is demodulated by multiplication with a frequency (F) and with the same frequency in phase quadrature,
   - the DC components representative of the part (C) of the carrier (C+SB) and the low-frequency components of these transmissions from the beacon representative of the SB parts of the carrier (C+SB) and the signal (SBO) are extracted from these products,
   - the modulus and the phase of the part C of the carrier (C+SB) are calculated, and
   - the amplitude of the side bands (SB) and the amplitude and the phase of the signal (SBO) are deduced from the low-frequency components.

2. Method according to claim 1, used in a guidance receiver on board an aircraft to generate DDM and SDM guidance signals, characterised in that the amplitude and the phase of the signals SB and SBO at the same low frequency LF are determined using a rotation characteristic of the phase of the signal SBO relative to that of the signal C+SB operative when the aircraft crosses the theoretical zero DDM plane.

3. Method according to claim 1, used in a guidance receiver on board an aircraft to generate DDM and SDM guidance signals, characterised in that the guidance DDM is taken to be identical to the DDM extracted from the highest field carrier (C+SB).

4. Method according to claim 1, applied to the guidance of an aircraft by using signals DDM and SDM obtained by processing signals transmitted by the beacon, characterised in that the DDM and SDM information is determined by phase filtering the signals (SBO) and (C+SB).

5. Method according to any one of claims 1 to 4 characterised in that the carriers containing (SB) or (SBO) information within a beacon channel are determined in order to determine the presence of jamming signals.

6. Device for implementing the method claimed in claim 1, characterised in that it includes:

   - a) multiplier means (2.1, 2.2) for demodulating the sum of the carrier (C+SB) and the signal (SBO) by multiplication with a frequency (F) and with the same frequency in phase quadrature,

- b) filter means for extracting from these products the DC components representative of the (C) part of the carrier (C+SB) and the low-frequency components of the transmissions from the beacon representative of the (SB) parts of the carrier (C+SB) and of the signal SBO, and
- c) means (7) for calculating the modulus and the phase of the part C of the carrier (C+SB), the amplitude of the side bands (SB) and the amplitude and the phase of the signal (SBO) from the low-frequency components of the transmissions from the beacon.

7. Device according to claim 6 characterised in that it includes an analogue-digital converter (4) for converting signals received from the beacon on the input side of the multipliers (2.1, 2.2).

8. Device according to claim 7 characterised in that it includes adjustable digital filters (3.1, 3.2) at the output of the multipliers (2.1, 2.2) for eliminating the sum signal formed at the output of the multipliers.

9. Device according to any one of claims 6 to 8 characterised in that it includes a plurality of phase quadrature demodulators (5.1 to 5.n) each locked to one carrier present in the transmissions from the beacon, at least one of said demodulators being assigned to detection of jamming signals.

10. Radio navigation receiver equipped with a device according to any one of claims 6 to 9.

11. Device according to anyone of claims 6 to 9, characterised in that the outputs of the demodulators (5.1 to 5.n) of each unit are processed in the calculating means (7) to identify and to quantify any malfunctions of certain functional units of the beacon.

12. Device according to claim 11 characterised in that it further includes a plurality of channels (14.1 through 14.n) for measuring signals radiated by the beacon at various points in the field of said beacon, said signals being introduced into the calculating means (7) to diagnose faults external to the beacon.

13. Device according to claim 11 or claim 12 characterised in that it includes a plurality of coupler units (25.1 to 25.n) each adapted to be connected to one of said measurement points of the beacon, each coupler unit including means (26, 30.1 to 30.n, 32.1 to 32.n) for transposing the frequency of the signals from the beacon to a plurality of intermediate frequencies (IF).

14. Radio navigation beacon characterised in that it is equipped with a device according to any one of claims 11 to 13 for diagnosis and monitoring the integrity of the signals that it transmits.

EP 0 815 463 B1

Fig 1

18

Fig 2A

Fig 2B

Fig 2C

Fig 2D

Fig 3

Fig 4

Fig 5

Fig 6